# EUROPEAN PATENT APPLICATION

(11) **EP 4 733 254 A1**
(43) Date of publication of application: **29.04.2026**
(21) Application number: 24815790.1
(22) Date of filing: 23.05.2024
(51) Int. Cl.: C01B 32/205, H01M 4/587, H01M 4/02

(54) **METHOD OF MANUFACTURING GRAPHITE MATERIAL**

(30) Priority: 31.05.2023 KR 20230070351
(71) Applicant: Posco Future M Co., Ltd., Pohang-si, Gyeongsangbuk-do 37918 (KR)
(72) Inventor: CHOI, Hyun Ki, Sejong 30002 (KR); KIM, Dae Sik, Sejong 30002 (KR); KWON, Sung Sang, Cheongju-si, Chungcheongbuk-do 28124 (KR); SONG, Hyeon Jun, Sejong 30002 (KR); KWON, Ki Min, Cheonan-si, Chungcheongnam-do 31079 (KR); JUNG, Myung Sun, Sejong 30002 (KR); KIM, Ga Eun, Sejong 30002 (KR); KIM, Jongchan, Sejong 30002 (KR); LEE, Seung Eun, Sejong 30002 (KR); YEON, Seon Young, Sejong 30002 (KR); JANG, Yeonghun, Sejong 30002 (KR); LEE, Jae Hyeon, Cheonan-si, Chungcheongnam-do 31198 (KR)
(74) Representative: Meissner Bolte Partnerschaft mbB
(86) International application number: PCT/KR2024/007024
(87) International publication number: WO 2024/248414

(57) **Abstract**

The present invention relates to a method for manufacturing a graphite material, and includes a step of pre-carbonizing a resulting product obtained from a graphite raw material and a coating material at a temperature in the range of from 1,050°C to 1,300°C, and a step of graphitizing the pre-carbonized resulting product.

## Description

### [Technical Field]

The present invention relates to a lithium secondary battery, and more particularly, to a method for manufacturing a graphite material used as a negative electrode active material for a lithium secondary battery.

### [Background Art]

With the increasing development and demand for mobile electronic devices, the demand for secondary batteries as energy sources has rapidly increased. Among various secondary batteries, lithium secondary batteries, which exhibit high energy density, high operating voltage, long cycle life, and low self-discharge rates, have been commercialized and widely utilized.

In addition, due to growing environmental concerns, interest has increased in electric vehicles and hybrid electric vehicles that can replace gasoline vehicles and diesel vehicles, which are major contributors to air pollution. Consequently, research for applying lithium secondary batteries as the power source for such electric vehicles and hybrid electric vehicles has been actively conducted.

A lithium secondary battery generally includes a positive electrode including a positive electrode active material, a negative electrode including a negative electrode active material, a separator, and an electrolyte, and performs charging and discharging through insertion and de-insertion (intercalation-deintercalation) of lithium ions. Because the lithium secondary battery offers advantages such as high energy density, high electromotive force, and high capacity, it is applied across various fields.

As the negative electrode active material, metallic lithium active materials, carbon-based negative electrode materials, or materials such as silicon oxide (SiOx) are employed. Among these, carbon-based negative electrode materials exhibit excellent capacity retention characteristics and efficiency. Since carbon-based negative electrode active materials used for the negative electrode of a lithium secondary battery have an electrode potential close to that of metallic lithium, structural changes during the lithium-ion insertion and de-insertion processes are minimal. Furthermore, carbon-based active materials enable continuous and repetitive oxidation and reduction reactions at the electrode, allowing lithium secondary batteries to exhibit high capacity and excellent cycle life.

As carbon-based negative electrode active materials, various types of materials are used including crystalline carbon materials such as natural graphite and artificial graphite, and amorphous carbon materials such as hard carbon and soft carbon. Among these, graphite-based negative electrode active materials, which provide excellent reversibility and improved cycle life, are the most widely used. Because graphite-based active materials exhibit a low discharge voltage of approximately -0.2 V versus lithium, cells employing graphite can achieve a high discharge voltage of approximately 3.6 V, thus providing excellent advantages in terms of energy density of lithium secondary batteries.

Artificial graphite, which is a crystalline carbon material, is produced by applying high thermal energy of 2,700°C or higher to form a graphitic crystal structure. Thus, artificial graphite possesses a more stable crystal structure than natural graphite, and exhibits significantly smaller structural changes during repeated lithium-ion insertion and de-insertion. For this reason, the cycle life of artificial graphite is approximately two to three times longer than that of natural graphite. Meanwhile, amorphous carbon materials such as soft carbon and hard carbon, which do not possess stabilized crystal structures, allow lithium-ion migration more readily, and therefore can be used in electrodes requiring high-rate charging due to their ability to support faster charge-discharge rates. Accordingly, carbon materials are typically used in mixed ratios depending on desired cycle-life characteristics and output characteristics of the target lithium secondary battery.

However, when artificial graphite, which is a graphite-based negative electrode active material, is used for fast-charging applications, decreasing the particle size or increasing the degree of spheroidization to improve fast-charging performance may undesirably reduce the packing density.

### [Detailed Description of the Invention]

### [Technical Problem]

According to an embodiment of the present invention, a method for manufacturing a graphite material provides a method capable of producing a graphite material in which the particle size is reduced or the degree of spheroidization is increased for improvement in fast-charging performance when artificial graphite is used as a fast-charging negative electrode active material, while simultaneously increasing the packing density.

### [Technical Solution]

According to an embodiment of the present invention, a method for manufacturing a graphite material may include a step of pre-carbonizing a resulting product obtained from a graphite raw material and a coating material at a temperature in the range of from 1,050°C to 1,300°C, and a step of graphitizing the pre-carbonized resulting product. In one embodiment, the pre-carbonizing includes assembling the graphite raw material and the coating material, and the coating material may be included in an amount of from 5 wt% to 20 wt% based on 100 wt% of the resulting product.

In one embodiment, the pre-carbonizing may be performed for 3.0 hours or longer. In one embodiment, the pre-carbonizing may be performed at a heating rate in the range of from 5°C/min to 20°C/min.

In one embodiment, the pre-carbonizing may include pulverizing the graphite raw material and the coating material. In one embodiment, the pulverizing may be performed under conditions in which a rotation speed of pulverizing blades is in the range of from 35 Hz to 40 Hz.

In one embodiment, the pulverizing may be performed under conditions in which an air intake amount is less than 35 Hz to 50 Hz. In one embodiment, the pulverizing may be performed under conditions in which classification (rotation speed of classifier blades) is 15 or higher.

In one embodiment, the pulverizing may be performed such that an average particle diameter (D50) of the resulting product is in the range of from 12 µm to 17 µm. In one embodiment, the coating material may include a coke-based raw material.

In one embodiment, the coke-based raw material may include coal-based needle green coke. In one embodiment, prior to the pre-carbonizing, a volatile content of the coating material may be from 4.0% to 5.0%, and after the pre-carbonizing, a volatile content of the coating material may be from 0.1% to 0.5%.

In one embodiment, an apparent density of the pre-carbonized resulting product may be 0.65 g/cc or greater. In one embodiment, a tap density of the pre-carbonized resulting product may be in the range of from 1.04 g/cc to 1.09 g/cc. In one embodiment, a weight loss rate of the pre-carbonized resulting product may be in the range of from 4.0% to 7.0%.

### [Effects of the Invention]

According to an embodiment of the present invention, since the method includes a pre-carbonizing step prior to the graphitizing step, it is possible to provide a method for manufacturing a graphite material in which the particle size is reduced or the degree of spheroidization is increased to improve fast-charging performance, while simultaneously increasing the packing density.

### [Brief Description of the Drawings]

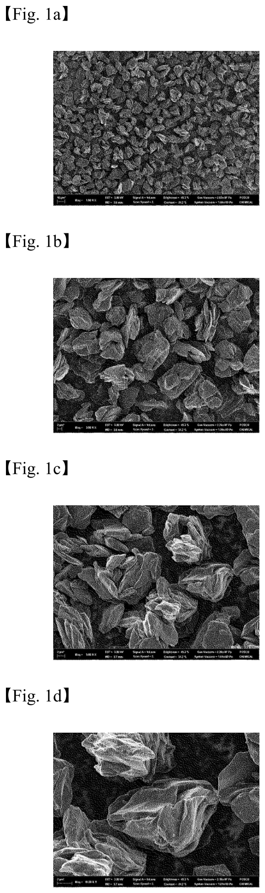

FIGS. 1A through 1D illustrate SEM photographs of a graphite material manufactured according to an embodiment of the graphite material manufacturing method of the present invention.

### [Modes for Carrying Out the Invention]

The terms such as "first," "second," and "third," and the like, are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section within the scope of the present invention.

The technical terminology used herein is employed merely for the purpose of describing particular embodiments and is not intended to limit the present invention. The singular forms used herein include the plural forms as well, unless the context clearly indicates otherwise. As used herein, the term "comprising/including/containing" specifies particular features, regions, integers, steps, operations, elements, and/or components, but does not preclude the presence or addition of other features, regions, integers, steps, operations, elements, and/or components.

When a part is described as being "on" or "over/above" another part, it may be directly on or over the other part, or intervening parts may be present therebetween. In contrast, when a part is described as being "directly on" another part, no intervening part is present therebetween.

Unless otherwise defined, all terms used herein, including technical and scientific terms, have the same meaning as commonly understood by one of ordinary skill in the art to which the present invention pertains. Terms generally defined in dictionaries shall be interpreted as having a meaning consistent with their use in the relevant technical literature and the present disclosure, and shall not be interpreted in an idealized or overly formal sense unless expressly defined herein.

Hereinafter, embodiments of the present invention will be described in detail so that those skilled in the art may readily carry out the invention. However, the embodiments described herein are presented by way of example only and are not intended to limit the invention, which is defined only by the scope of the claims that follow.

According to an embodiment of the present invention, a method for manufacturing a graphite material includes a step of preliminarily carbonizing a product obtained from a graphite raw material and a coating material, and a step of graphitizing the preliminarily carbonized product. More specifically, the method for manufacturing a graphite material according to the present invention may include an additional preliminary heat-treatment step prior to the graphitization step.

In the step of preliminarily carbonizing the product obtained from the graphite raw material and the coating material, the graphite raw material may be a coke-based material. The coke-based material may include at least one selected from coal-based coke, metallurgical coke, and pitch coke.

In one embodiment, the coke-based material may be, for example, coal-based coke. More specifically, the coal-based coke may be coal-based needle coke. The coal-based needle coke contains a lower amount of moisture and volatile matter compared to petroleum-based green coke. Because the coal-based needle coke contains less moisture and volatile matter, its density may be significantly increased during the preliminary carbonization or graphitization process, compared to petroleum-based coke.

In one embodiment, the product obtained from the graphite raw material and the coating material may have a moisture content of 0.28 to 0.42 wt%. More specifically, the product may have a moisture content of 0.30 to 0.40 wt%.

In one embodiment, the product obtained from the graphite raw material and the coating material may have a volatile matter content of 4.0 to 5.0 wt%. More specifically, the volatile matter content may be 4.2 to 4.6 wt%. When the product satisfies the above ranges, the product exhibits high self-adhesiveness during the granulation process, improves the bonding strength between the primary particles of artificial graphite, enables artificial graphite to have high structural robustness, and offers the advantage of producing artificial graphite having a high density after undergoing preliminary carbonization or graphitization. The volatile matter content may be measured using measurement methods known in the art.

The coating material may be a pitch-based material. Specifically, the pitch-based material may include at least one selected from coal tar, tar light oil, tar middle oil, tar heavy oil, naphthalene oil, anthracene oil, coal-tar pitch, pitch oil, oxygen-crosslinked petroleum pitch, and heavy oil. More specifically, the pitch-based material may be, for example, coal-tar pitch.

In one embodiment, the step of preliminarily carbonizing includes a step of granulating the graphite raw material and the coating material. The step of granulating may include uniformly mixing the graphite raw material and the coating material. For example, the granulation step may be performed using known mixers such as stirring-type, rotary-type, and pneumatic-type mixers.

In one embodiment, in the step of granulating the graphite raw material and the coating material, the coating material may be included in an amount of 5 to 20 wt% based on 100 wt% of the product obtained by granulating the graphite raw material and the coating material. More specifically, the coating material may be included in an amount of 13 to 15 wt%. When the coating material satisfies the above range, it may be uniformly mixed with the graphite raw material.

When the content of the coating material exceeds the upper limit, there may be a problem in that the capacity per unit weight of the graphitized product decreases. When the content falls below the lower limit, a low granulation degree may result, causing inferior output characteristics of the graphitized product.

The step of preliminarily carbonizing the product obtained from the graphite raw material and the coating material may include heat-treating the product obtained through granulation prior to the graphitization step. In one embodiment, the preliminary carbonization step may be performed at a temperature lower than the temperature used in the graphitization step.

In one embodiment, the preliminary carbonization step may be performed at a temperature of 1,050 to 1,300 °C. More specifically, the preliminary carbonization step may be performed at 1,050 to 1,200 °C, and even more specifically at 1,050 to 1,150 °C. When the preliminary carbonization step is performed within the above ranges, moisture and volatile matter remaining in the graphite raw material and the coating material may be removed, thereby improving powder flowability and consequently improving density.

When the temperature of the preliminary carbonization step exceeds the upper limit, the process time becomes long, causing a decrease in productivity. When the temperature falls below the lower limit, the specific surface area increases and the tap density decreases.

In one embodiment, the preliminary carbonization step may be performed for 3.0 hours or longer. More specifically, the step may be performed for 3.42 hours or longer, and even more specifically for 5.0 hours or longer. The time may refer to the retention time of the preliminary carbonization. When the retention time satisfies the above ranges, the apparent density and tap density are improved. If the time falls outside of the above range, the apparent density and tap density decrease.

In one embodiment, the preliminary carbonization step may be performed at a heating rate of 5 to 20 °C/min. More specifically, the heating rate may be 5 to 10 °C/min, and even more specifically, 5 to 8 °C/min. When the heating rate satisfies the above ranges, the specific surface area may be reduced. When the heating rate does not satisfy the above ranges, the specific surface area increases, decreasing powder flowability between steps and increasing the overall process time.

In one embodiment, after the preliminary carbonization step, the preliminary-carbonized product obtained from the graphite raw material and the coating material may have a moisture content of 0.01 to 0.1 wt%. More specifically, the moisture content may be 0.01 to 0.03 wt%.

In one embodiment, after the preliminary carbonization step, the volatile matter content of the product may be 0.1 to 1.5 wt%. More specifically, the volatile matter content may be 0.1 to 0.5 wt%.

The product obtained from the graphite raw material and the coating material may undergo contraction and removal of volatile matter during the preliminary carbonization step, thereby significantly increasing density and improving productivity.

In one embodiment, the apparent density of the preliminary-carbonized product may be 0.65 g/cc or higher. More specifically, the apparent density may be 0.65 to 0.69 g/cc. It may be confirmed that the density increases as the product undergoes contraction and volatilization during the preliminary carbonization process.

In one embodiment, the tap density of the preliminary-carbonized product may be 1.04 to 1.09 g/cc. In one embodiment, the weight loss rate of the preliminary-carbonized product may be 4.0 to 7.0 wt%, and more specifically 4.5 to 6.5 wt%. As described above, both the tap density and weight loss rate may result from the contraction and volatilization occurring during the preliminary carbonization step.

In one embodiment, the preliminary carbonization step may include a step of pulverizing the graphite raw material and the coating material. The pulverizing step refers to pulverizing the granulated product such that the average particle size (D50) becomes 12 to 17 µm. The pulverizing step may be performed to prevent excessive fusion of the granulated product. Examples of suitable pulverizers include known milling devices such as hammer mills, stirring mills, jet mills, ball mills, and bead mills. Preferably, mechanochemical processors (shear-compression processing equipment) such as Hybridization System (Nara Machinery Co., Ltd.), Mechanofusion System (Hosokawa Micron), Nobilta (Hosokawa Micron), or dry attritors (Nippon Coke & Engineering Co., Ltd.) may be employed.

In one embodiment, the step of pulverizing the graphite raw material and the coating material may be performed at a blade rotation speed of 35 to 45 Hz, and more specifically at 38 to 42 Hz.

In one embodiment, the step of pulverizing may be performed at an air-inlet flow of 35 to 50 Hz, and more specifically at 38 to 45 Hz.

In one embodiment, the step of pulverizing may be performed under conditions in which the classification speed (the rotational speed of the classifier blades for particle size classification) is 15 Hz or higher, and more specifically 18 Hz or higher.

When the pulverizing step is performed within the above conditions, the tap density may be improved, resulting in improved productivity. When the pulverizing condition deviates from the above ranges, the density may decrease, leading to a reduction in productivity.

The graphitization step may include graphitizing the preliminary-carbonized product at a temperature higher than the preliminary carbonization temperature. In one embodiment, the graphitization step may be performed at 2,800 to 3,200 °C. More specifically, the graphitization step may be performed at 2,900 to 3,100 °C. When the graphitization step is carried out within the above temperature range, the artificial graphite produced may achieve an appropriate degree of graphitization, and may exhibit high structural stability and high capacity per gram.

The graphitization may be performed using a high-temperature furnace known in the art, such as an Acheson furnace. After completion of the graphitization process, oversized particles formed due to agglomeration during the high-temperature graphitization process may be removed by sieving. By separating these oversized particles, it is possible to prevent adverse effects on processing characteristics such as slurry stability and coating performance.

The preferred embodiments and comparative examples of the present invention are described below. However, the following embodiments are merely exemplary preferred embodiments of the present invention, and the present invention is not limited to the embodiments described herein.

### <Experimental Examples>

### Granulated Material Preparation Step

Coal-based coke was coarsely pulverized using a pin mill and was subsequently finely pulverized using a pulverizer to prepare coke fine particles. Thereafter, pitch was pulverized using a jet mill to obtain a pitch-pulverized product. The coke fine particles and the pitch-pulverized product were mixed and then fed into a granulator, and the mixture was heated up to 700 °C under a nitrogen atmosphere to obtain a granulated body. The granulated body was then pulverized using an ACM.

### Preliminary Carbonization Step

Table 1 below shows the results obtained when the granulated material prepared through the above granulated-material preparation step was pulverized under pulverizing conditions in which the blade rotation speed and air-inlet flow rate were high and the classifier rotation speed was low, and thereafter subjected to the subsequent steps described in Example 1 and Comparative Example 1.

In Table 1, the ash content was measured by drying Sample 5 at 120 °C, cooling it in a desiccator, placing it in an electric furnace, heating at 1200 °C for 12 hours, cooling in air, and then cooling again in a desiccator for 30 minutes. The metallic foreign matter was measured using an ICAP-7000 instrument.

### <Example 1>: Preliminary Carbonization Performed

The pulverized granulated material was preliminarily carbonized at a temperature of 1,200 °C, a heating rate of 5.7 °C/min, and a retention time of 3.42 hours. Thereafter, a graphitization step was performed at 3000 °C.

### <Comparative Example 1>

The pulverized granulated material was graphitized at 3000 °C without performing the preliminary carbonization step.

**[Table 1]**

| | ash | Fe | Ni | Zn | Cr | Al | Ca | Cu | S | Si | Co | Others |
|---|---|---|---|---|---|---|---|---|---|---|---|---|
| Example 1 | 0.024 | 11.2 | 15.7 | 0.3 | 0.4 | 0.6 | 34.5 | 0.2 | 1.3 | 1.2 | 0.7 | 0.4 |
| Comparati ve Example 1 | 0.032 | 15.9 | 19.1 | 0.3 | 0.6 | 1.3 | 65.7 | 0.3 | 1.8 | 1.3 | 0.9 | 1.9 |

Referring to Table 1, it was confirmed that Example 1, in which a preliminary carbonization step was performed prior to the graphitization step, exhibited lower ash content and lower metallic foreign-matter content compared to Comparative Example 1, in which no preliminary carbonization was performed. In particular, Example 1 showed lower levels of metallic impurities such as Fe, Ni, and Ca, providing the advantage of reduced side reactions during electrochemical evaluation.

### Control of Preliminary Carbonization Conditions: Maximum Temperature

Referring to Table 2 below, when the maximum temperature during the preliminary carbonization step was controlled, the weight change rate [%], average particle size [D50], apparent density [g/cc], tap density before and after carbonization [g/cc], and specific surface area (BET-SSA) [m²/g] were obtained, and each measurement method is as follows.
- (Weight change rate [%]): (Weight after preliminary carbonization) / (Weight before preliminary carbonization).
- (Average particle size [D50]): 0.04 g of a sample was mixed with distilled water and Triton X-100, dispersed for 1 minute using an ultrasonic disperser, and the particle size was measured using a Microtrac particle-size analyzer. D50 corresponds to the particle size at which the cumulative percentage reaches 50%.
- (Apparent density [g/cc]): After weighing a sample, it was poured into a flowmeter funnel. Once the density cup was completely filled with the sample, the excess was removed, and the weight was measured to determine the apparent density.
- (Tap density before and after carbonization [g/cc]): 10 g of a sample was placed in a 25 mL cylinder, and the tap density was measured using a Bettersize tap-density tester at 250 rpm with 3,000 tappings.
- (Specific surface area (BET-SSA) [m²/g]): 2 g of a sample was placed in a cylinder, pretreated at 300 °C for 1 hour under vacuum, cooled at room temperature for 30 minutes, and then measured using a Tristar instrument.

**[Table 2]**

| Sample | Carbonization Condition | | | After Carbonizatio n, weight Change Rate (%) | Average Particle Size (D50) | Apparent Density (g/cc) | Tap Density (g/cc) | | BET [m²/g] |
|---|---|---|---|---|---|---|---|---|---|
| | Maximum Temperatu re (°C) | Holding Time (h) | Heating Rate (°C/min) | | | | Before | After | |
| Example 2-1 | 1200 | 3.42 | 5.7 | -5.5 | 12.9 | 0.65 | 0.68 | 0.96 | 2.5 |
| Example 2-2 | 1150 | 3.42 | 5.7 | -5.3 | 13.7 | 0.67 | 0.68 | 0.96 | 2.2 |
| Example 2-3 | 1100 | 3.42 | 5.7 | -5.2 | 13.6 | 0.69 | 0.68 | 0.97 | 3.2 |
| Example 2-4 | 1050 | 3.42 | 5.7 | -5.1 | 13.9 | 0.65 | 0.68 | 0.96 | 2.4 |
| Comparative Example 2 | 1000 | 3.42 | 5.7 | -5.0 | 13.4 | 0.62 | 0.68 | 0.93 | 1.2 |

As shown in Table 2, Exemplary Embodiments 2-1 through 2-4, in which the pre-carbonization is carried out at a maximum temperature in the range of 1,050 to 1,200 °C, exhibit higher tap density and specific surface area compared to Comparative Example 2, in which the pre-carbonization is carried out at a maximum temperature of 1,000 °C.

### With respect to control of the conditions of the pre-carbonization step: holding time

Table 3 below shows the weight change ratio (%), average particle size (D50), apparent density (g/cc), tap densities before and after carbonization (g/cc), and specific surface area (BET-SSA, m²/g) when the holding time during the pre-carbonization step is varied.

**[Table 3]**

| Sample | Carbonization Condition | | | After Carboniz ation, weight Change Rate (%) | Average Particle Size (D50) | Apparent Density (g/cc) | Tap Density (g/cc) | | BET [m²/g] Heating Rate (°C/min) |
|---|---|---|---|---|---|---|---|---|---|
| | Maximum Temperatur e (°C) | Holding Time (h) | Heating Rate (°C/min) | | | | Maximum Temperatur e (°C) | Holding Time (h) | |
| Comparative Example 3-1 | 1200 | 0 | 15 | -5.2 | 13.0 | 0.61 | 0.68 | 0.95 | 1.4 |
| Example 3-1 | 1200 | 3.42 | 15 | -5.6 | 13.9 | 0.69 | 0.70 | 0.95 | 2.8 |
| Example 3-2 | 1200 | 5 | 15 | -5.5 | 13.4 | 0.65 | 0.68 | 0.98 | 1.7 |
| Comparative Example 3-2 | 1200 | 0 | 10 | -5.4 | 13.7 | 0.62 | 0.70 | 0.93 | 2.2 |
| Example 3-3 | 1200 | 2 | 10 | -5.4 | 13.8 | 0.62 | 0.70 | 0.92 | 2.9 |
| Example 3-4 | 1200 | 3.42 | 10 | -5.3 | 13.2 | 0.67 | 0.70 | 0.95 | 2.0 |
| Comparative Example 3-3 | 1200 | 0 | 5.7 | -5.0 | 13.5 | 0.68 | 0.70 | 0.93 | 1.4 |
| Example 3-5 | 1200 | 3.42 | 5.7 | -5.0 | 14.0 | 0.68 | 0.70 | 0.96 | 1.6 |
| Example 3-6 | 1200 | 5 | 5.7 | -5.8 | 13.6 | 0.68 | 0.70 | 0.95 | 2.3 |

As shown in Table 3, it was confirmed that the apparent density increases as the holding time increases under the pre-carbonization conditions. In addition, the tap density was found to increase as the holding time increases.

### With respect to control of the pre-carbonization conditions: heating rate

Table 4 below shows the weight change ratio (%), average particle size (D50), apparent density (g/cc), tap densities before and after carbonization (g/cc), and specific surface area (BET-SSA, m²/g) when the heating rate during the pre-carbonization step is varied.

**[Table 4]**

| Sample | Carbonization Condition | | | After Carbonizati on, weight | Average Particle Size (D50) | Apparent Density (g/cc) | Tap Density (g/cc) | | BET [m²/g] Heating Rate (°C/min) |
|---|---|---|---|---|---|---|---|---|---|
| | Maximum Temperature (°C) | Holding Time (h) | Heating Rate (°C/min) | Change Rate (%) | | | Maximum Temperature (°C) | Holding Time (h) | |
| Example 4-1 | 1200 | 3.42 | 5.7 | -5.0 | 14.0 | 0.68 | 0.70 | 0.96 | 1.6 |
| Example 4-2 | 1200 | 3.42 | 10 | -5.3 | 13.2 | 0.67 | 0.70 | 0.95 | 2.0 |
| Example 4-3 | 1200 | 3.42 | 15 | -5.6 | 13.9 | 0.69 | 0.70 | 0.95 | 2.8 |

From Table 4, it was confirmed that, under the pre-carbonization conditions, the tap density increases as the heating rate decreases, and the specific surface area decreases.

### Control of the Crushing Step

Referring to Table 5, coal-based coke raw material was granulated by adjusting the content of the granulation pitch to 8 wt%, 13 wt%, and 15 wt% based on the granulated product weight. Thereafter, the granulated product was crushed under conditions in which the blade rotation speed and air inflow were high and the classifier speed was low. Following the crushing step, pre-carbonization at 1,200 °C and graphitization at 3,000 °C were performed.

The results for the average particle size (D50), tap density, specific surface area (BET), degree of graphitization, capacity, and efficiency of the graphitized product are shown below. The measurement methods for the average particle size (D50), tap density, specific surface area (BET), degree of graphitization, capacity, and efficiency of the graphitized product are as follows.

### • Average particle size (D50) of the graphitized product:

0.04 g of the sample was mixed with distilled water and Triton X100, dispersed for 1 minute using an ultrasonic disperser, and then measured using a Microtrac particle size analyzer.

### • Tap density (g/cc):

15 g of sample was placed into a 25 mL cylinder, and tap density was measured using a Bettersize tap density analyzer at 250 rpm for 3,000 tapping cycles.

### • Specific surface area (BET, m²/g):

2 g of sample was placed in a cylinder, pretreated under vacuum at 300 °C for 1 hour, cooled at room temperature for 30 minutes, and measured using a Tristar instrument.

### • Degree of graphitization (%):

The graphitized product and silicon were mixed at a weight ratio of 5:1, the mixed powder was loaded into a sample holder, and XRD analysis was conducted using a Bruker AXS D8 Discover with GADDS. Measurement conditions were as follows: scan range 10-80°, scan rate 1°/min, step size 0.02°.

### • Capacity (mAh/g):

After cell fabrication and a rest time of 30 hours, charging and discharging were conducted at a C-rate of 0.1C under 0.1CC/CV and 0.1CC modes. The third-cycle discharge capacity was recorded.

### • Efficiency (%):

After cell fabrication and a rest time of 30 hours, charging and discharging were conducted at a C-rate of 0.1C under 0.1CC/CV and 0.1CC modes. The first-cycle efficiency was calculated as (first-cycle discharge capacity / first-cycle charge capacity) × 100.

**[Table 5]**

| Sample | Assembly pitch Content [wt%] | Graphitized Product | | | | | |
|---|---|---|---|---|---|---|---|
| | | D50 [*µ*m] | Tap Density [g/cc] | BET [m²/g] | Degree of Graphitization [%] | Capacity [mAh/g] | Efficiency [%] |
| Comparative Example 5 | 5 | 12..0 | 1.07 | 1.8 | 92.2 | 352.1 | 93.8 |
| Example 5-1 | 13 | 15.1 | 1.05 | 1.2 | 91.8 | 350.5 | 93.6 |
| Example 5-2 | 15 | 14.2 | 1.09 | 1.5 | 91.1 | 349.1 | 93.6 |

Referring to Table 5, when the assembly pitch content is excessively low during the manufacture of the assembled product, the tap density and charge output characteristics decrease. In contrast, within the range of the present invention, the degree of assembly increases, resulting in excellent tap density and charge output characteristics. When the assembly pitch content is excessively high, the capacity is expected to decrease.

### Control of Crushing Conditions

Referring to Tables 6 and 7 below, the tables show the metal foreign material contents after crushing the assembled product under the crushing conditions shown in Table 6.

The crushing conditions in Table 6 are as follows:
- Main Machine = rotational speed of the crushing blade
- Air Blower = air inflow rate (airflow) for transporting the powder
- Classification = rotational speed of the classifier blade

The Y12 condition corresponds to a crushing condition in which the crushing blades rotate at a high speed, intended to break apart the agglomerated assembled structures. Under Y12, the crushing blade speed and air inflow rate are high, while the classifier speed is low.

The X1 condition corresponds to a crushing condition in which the crushing blades rotate at a low speed, intended to pass the assembled structures through the crushing machine without breaking apart the agglomerated forms. Under X1, both the crushing blade speed and classifier speed are low, while the air inflow rate is high.

### Example 6-1

The assembled product was crushed under the Y12 crushing condition with an assembly pitch content of 13 wt%.

### Example 6-2

The assembled product was crushed under the Y12 crushing condition with an assembly pitch content of 15 wt%.

### Comparative Example 6-1

The assembled product was crushed under the X1 crushing condition with an assembly pitch content of 13 wt%.

### Comparative Example 6-2

The assembled product was crushed under the X1 crushing condition with an assembly pitch content of 15 wt%.

**[Table 6]**

| | Crushing Type | Main Machine [HZ] | Air Blower [HZ] | Classification [HZ] |
|---|---|---|---|---|
| Y12 | Strong Crushing | 40 | 40 | 20 |
| X1 | Weak Crushing | 10 | 50 | 10 |

**[Table 7]**

| N o. | Crush ing Cond itions | Assembl y Pitch Content [wt%] | Assembled Product | | Pre-Carbonized Product | | | Graphitized Product | | | | | |
|---|---|---|---|---|---|---|---|---|---|---|---|---|---|
| | | | Average Particle Size D50 [µm] | Tap Density [g/cc] | Average Particle Size D50 [µm] | Tap Density [g/cc] | BET Surface Area [m²/g] | Average Particle Size D50 [µm] | Tap Density [g/cc] | BET Surface Area [m²/g] | Degree of Graphiti zation [%] | Capacity [mAh/g] | Efficien cy [%] |
| E xa m pl e 6-1 | Y12 | 13 | 16.5 | 0.64 | 14.9 | 0.97 | 1.05 | 15.1 | 1.05 | 1.2 | 91.8 | 350.5 | 93.6 |
| C-E xa m pl e 6-1 | X1 | 13 | 16.5 | 0.61 | 15.1 | 0.95 | 0.85 | 14.9 | 1.04 | 1.3 | 91.5 | 348.7 | 93.8 |
| E xa m pl e 6-2 | Y12 | 15 | 16.3 | 0.65 | 14.4 | 0.98 | 0.84 | 14.2 | 1.09 | 1.5 | 91.1 | 349.1 | 93.6 |
| C-E xa m pl e 6-2 | X1 | 15 | 17.7 | 0.65 | 15.5 | 0.95 | 0.73 | 15.2 | 1.07 | 1.7 | 91.7 | 346.9 | 93.1 |

Referring to Tables 6 and 7, when the assembled product is crushed under the crushing conditions of the present invention, differences are observed in the BET surface area of the pre-carbonized product after pre-carbonization, and differences in tap density and capacity are also observed in the graphitized product.

FIGS. 1A to 1D illustrate SEM images of graphite materials prepared according to an embodiment of the method for manufacturing a graphite material of the present invention. FIGS. 1A to 1D respectively show SEM images of the graphite materials prepared according to the manufacturing method at magnifications of 1k, 3k, 5k, and 10k using FE-SEM. Referring to FIGS. 1A to 1D, it can be confirmed that the graphite material subjected to the pre-carbonization step according to the present invention exhibits a densely packed structure.

While the preferred embodiments of the present invention have been described in detail above, the scope of the invention is not limited thereto. Various modifications and improvements made by those skilled in the art based on the basic concepts defined in the following claims also fall within the scope of the present invention.

## Claims

1. A method for manufacturing a graphite material, comprising:
pre-carbonizing a resulting product obtained from a graphite raw material and a coating material at a temperature in the range of from 1,050°C to 1,300°C; and
graphitizing the pre-carbonized resulting product.

2. The method of claim 1, wherein the pre-carbonizing comprises assembling the graphite raw material and the coating material, and the coating material is included in an amount of from 5 wt% to 20 wt% based on 100 wt% of the resulting product.

3. The method of claim 1, wherein the pre-carbonizing is performed for 3.0 hours or longer.

4. The method of claim 1, wherein the pre-carbonizing is performed at a heating rate in the range of from 5°C/min to 20°C/min.

5. The method of claim 1, wherein the pre-carbonizing comprises pulverizing the graphite raw material and the coating material.

6. The method of claim 5, wherein the pulverizing is performed under conditions in which a rotation speed of pulverizing blades is from 35 Hz to 40 Hz.

7. The method of claim 5, wherein the pulverizing is performed under conditions in which an air intake amount is less than 35 Hz to 50 Hz.

8. The method of claim 5, wherein the pulverizing is performed under conditions in which classification (rotation speed of classifier blades) is 15 or higher.

9. The method of claim 5, wherein the pulverizing is performed such that an average particle diameter (D50) of the resulting product is in the range of from 12 µm to 17 µm.

10. The method of claim 1, wherein the coating material comprises a coke-based raw material.

11. The method of claim 10, wherein the coke-based raw material comprises coal-based needle green coke.

12. The method of claim 1, wherein, prior to the pre-carbonizing, a volatile content of the coating material is from 4.0% to 5.0%, and after the pre-carbonizing, a volatile content of the coating material is from 0.1% to 0.5%.

13. The method of claim 1, wherein an apparent density of the pre-carbonized resulting product is 0.65 g/cc or greater.

14. The method of claim 1, wherein a tap density of the pre-carbonized resulting product is in the range of from 1.04 g/cc to 1.09 g/cc.

15. The method of claim 1, wherein a weight loss rate of the pre-carbonized resulting product is in the range of from 4.0% to 7.0%.
